# EUROPÄISCHE PATENTSCHRIFT

(11) **EP 3 391 547 B1**
(45) Veröffentlichungstag und Bekanntmachung des Hinweises auf die Patenterteilung: **08.06.2022**
(21) Anmeldenummer: 16785115.3
(22) Anmeldetag: 19.10.2016
(51) Int. Cl.: H04B 1/04, H04B 1/18

(54) **VORRICHTUNG ZUM VERARBEITEN ODER ERZEUGEN EINES SIGNALS UND VERFAHREN ZUM ERMITTELN EINER ANPASSUNG**
APPARATUS FOR PROCESSING OR GENERATING A SIGNAL AND METHOD FOR DETERMINING AN ADJUSTMENT
DISPOSITIF DE TRAITEMENT OU DE GÉNÉRATION D'UN SIGNAL ET PROCÉDÉ DE DÉTERMINATION D'UNE ADAPTATION

(30) Priorität: 17.12.2015 DE 102015225592
(43) Veröffentlichungstag der Anmeldung: 24.10.2018
(73) Patentinhaber: Robert Bosch GmbH, 70442 Stuttgart (DE)
(72) Erfinder: STEINBUCH, Dirk, 71299 Wimsheim (DE); MOERTLBAUER, Karin, 71263 Weil Der Stadt (DE); OTT, Michael, 70378 Stuttgart (DE); STEINHAUER, Matthias, 71711 Steinheim (DE)
(86) Internationale Anmeldenummer: PCT/EP2016/075020
(87) Internationale Veröffentlichungsnummer: WO 2017/102138

(56) Entgegenhaltungen:
- DE-A1-102009 045 546
- US-A1- 2014 120 849

## Beschreibung

Die vorliegende Erfindung betrifft eine Vorrichtung zum Verarbeiten oder Erzeugen eines Signals, insbesondere zum Verarbeiten eines Hochfrequenzsignals (HF-Signals), welches durch eine mit der Vorrichtung gekoppelte externe Antennenvorrichtung empfangen wird und/oder zum Erzeugen eines Signals, welches zum Aussenden mittels einer mit der Vorrichtung gekoppelten externen Antennenvorrichtung ausgesendet wird. Die Erfindung betrifft weiterhin ein Verfahren zum Ermitteln einer Anpassung eine Vorrichtung zum Verarbeiten oder Erzeugen eines Signals. Das zu verarbeitende oder zu erzeugende Signal ist insbesondere ein Hochfrequenzsignal, beispielsweise ein Radarsignal.

### Stand der Technik

Vorrichtungen zum Verarbeiten oder Erzeugen von Signalen werden beispielsweise in Radarsensoren verwendet. Automotive Radarsensoren im 77 GHz-Band für den nahen und mittleren Entfernungsbereich arbeiten hauptsächlich mit getrennten Sende- und Empfangsantennen. Diese Antennen sind auf einer geeigneten Hochfrequenz-Leiterplatte (HF-Leiterplatte) als resonante Strukturen realisiert. Die passiven Antennen werden mit einer aktiven Transmitter- oder Empfänger-Mikrowellenschaltung (zum Beispiel einer integrierten monolithischen Mikrowellenschaltung, MMIC, Englisch "monolithic microwave integrated circuit") mittels Mikrostreifenleitungen unter Verwendung von geeigneter Aufbau- und Verbindungstechnik zusammengeschaltet. Dabei entsteht eine Stoßstelle zwischen der HF-Leiterplatte und der aktiven Schaltung, welche zu Schwankungen bei der Realisierung dieses Hochfrequenz-Signalübergangs führen kann. Beispielsweise führen unerwünschte Rückreflexionen eines Sendesignals sowie eine unerwünschte zurückreflektierte Empfangsleistung zu einer Degradation von Radarsensoren bezüglich Reichweite.

In der DE 103 00 955 A1 ist ein Radar-Transceiver für Mikrowellen- und Millimeterwellen-Anwendungen beschrieben.

In der DE 10 2009 045546 A1 ist eine HF Sende-/Empfangsschaltung mit einem abstimmbaren Anpass-Netzwerk beschrieben.

In der US 2014/0120849 A1 ist eine in einen Siliciumchip integrierte Schaltung beschrieben, in welcher Eigenschaften eines HF-Signals gemessen und dazu verwendet werden, eine Impedanz einer Antenne einer Impedanz einer Übertragungsleitung anzupassen.

### Offenbarung der Erfindung

Die vorliegende Erfindung offenbart eine Vorrichtung mit den Merkmalen des Patentanspruchs 1.

Dementsprechend ist eine Vorrichtung zum Verarbeiten oder Erzeugen eines Signals vorgesehen mit: einem Substrat; einer Signaleinrichtung, welche zum Verarbeiten eines Empfangssignals und/oder zum Erzeugen eines Sendesignals ausgebildet ist; einer Schnittstelleneinrichtung, mittels welcher die Signaleinrichtung mit einer Sende- und/oder Empfangsantenne zum Aussenden des erzeugten Sendesignals und/oder zum Empfangen des zu verarbeitenden Empfangssignals koppelbar ist; einer Trennungseinrichtung, welche dazu ausgelegt ist, erste Signale, welche von der Schnittstelleneinrichtung aus auf die Signaleinrichtung zulaufen, von zweiten Signalen zu trennen, welche von der Signaleinrichtung aus auf die Schnittstelleneinrichtung zulaufen; und einer Ausgabeeinrichtung, an welcher die voneinander getrennten ersten und zweiten Signale zum Berechnen einer Anpassung getrennt voneinander abgreifbar sind; wobei die ersten Signale an einer ersten Messeinrichtung der Ausgabeeinrichtung abgreifbar sind und wobei die zweiten Signale an einer zweiten Messeinrichtung der Ausgabeeinrichtung abgreifbar sind; wobei die Signaleinrichtung, die Schnittstelleneinrichtung, die Trennungseinrichtung und die Ausgabeeinrichtung an dem Substrat angeordnet sind, insbesondere in das Substrat integriert sind; wobei die Trennungseinrichtung als viertoriger Ringkoppler mit einem ersten Tor, einem zweiten Tor, einem dritten Tor und einem vierten Tor ausgebildet ist; wobei die Signaleinrichtung an dem ersten Tor und an dem dritten Tor angeschlossen ist und wobei die Schnittstelleneinrichtung der Vorrichtung an dem vierten Tor angeschlossen ist; wobei die erste Messeinrichtung an das dritte Tor des Ringkopplers angeschlossen ist und wobei die zweite Messeinrichtung an ein zweites Tor des Ringkopplers angeschlossen ist; wobei die Signaleinrichtung außerdem einen Mischer aufweist, welcher zum Verarbeiten des über die Schnittstelleneinrichtung empfangenen Empfangssignals ausgebildet ist; wobei der Mischer als ein Eingangssignal ein Signal erhält, welches von dem dritten Tor des Ringkopplers abgezweigt wird, und der Mischer dazu ausgebildet ist, als Oszillatorsignal ein an dem ersten Tor des Ringkopplers anliegendes Signal zu empfangen; und wobei der Mischer dazu ausgebildet ist, durch Mischen aus dem Eingangssignal und dem Oszillatorsignal ein Nutzsignal zu erzeugen.

Unter einer Anpassung ist eine Größe zu verstehen, welche zum Indizieren einer Effizienz eines Übergangs zwischen einer Sende- und/oder Empfangsantenne einerseits und einer Vorrichtung zum Verarbeiten oder Erzeugen eines Signals andererseits geeignet ist. Die Anpassung kann insbesondere ein Quotient aus einer reflektierten Leistung und einer ohne Reflexion durchlaufenden Leistung sein. Zwischen der Schnittstelleneinrichtung und der Sende- und/oder Empfangsantenne ergibt sich nach dem Koppeln eine Stoßstelle, an welcher unerwünschte Reflexionen stattfinden können.

Darunter, dass die ersten und zweiten Signale abgreifbar sind bzw. bereitgestellt werden, soll insbesondere verstanden werden, dass diese für die Vorrichtung selbst, oder für externe Messvorrichtungen, zur Verfügung stehen oder von diesen verarbeitet werden.

### Vorteile der Erfindung

Die erfindungsgemäße Vorrichtung ermöglicht eine Trennung von hin- und rücklaufenden Signalen und insbesondere deren Leistungsmessung. Hin- und rücklaufende Leistungen können permanent, das heißt kontinuierlich während eines Betriebs der Vorrichtung, gemessen werden. Somit können jederzeit und unmittelbar Daten zur Qualität eines Hochfrequenz-Übergangs zwischen der Vorrichtung einer Sende- und/oder Empfangsantenne vorliegen.

Dadurch, dass die Trennungseinrichtung der Vorrichtung als viertoriger Ringkoppler ausgebildet ist, sind die ersten und die zweiten Signale besonders effizient voneinander trennbar.

Die erfindungsgemäße Lösung ist sowohl für bistatische Radars mit getrennten Sende- und Empfangsantennen wie auch monostatische Radars mit gemeinsamen Sende- und Empfangsantennen geeignet.

Die Anpassung von einer HF-Leiterplatte, beispielsweise mit Sende- und/oder Empfangsantennen, aus in die Vorrichtung, beispielsweise eine MMIC, kann vorteilhaft mit externer Messtechnik gemessen werden. Alternativ oder zusätzlich ist auch eine Messung der Anpassung von der Vorrichtung aus in Richtung der HF-Leiterplatte möglich. Gewonnene Erkenntnisse über die Anpassung können zum Verbessern der Stoßstelle, sowohl von der Vorrichtung als auch von der Leiterplatte aus verwendet werden. Das Erzeugen und/oder Verarbeiten des Sende- bzw. Empfangssignals kann basierend auf der ermittelten Anpassung automatisch angepasst werden. Ursachen für Performance-Einbußen können leichter ermittelt werden. Eine Funktion der Hochfrequenz-Schnittstelle, das heißt der Stoßstelle zwischen der Vorrichtung und der Leiterplatte, kann während eines Betriebs der Vorrichtung überwacht werden. Gegebenenfalls kann auch ein auszusendendes und/oder ein empfangenes Signal basierend auf den gewonnenen Erkenntnissen angepasst, z.B. verstärkt, werden.

Vorteilhafte Ausführungsformen und Weiterbildungen ergeben sich aus den Unteransprüchen sowie aus der Beschreibung unter Bezugnahme auf die Figuren.

Gemäß einer bevorzugten Weiterbildung ist das Substrat mit der Signaleinrichtung, der Schnittstelleneinrichtung, der Trennungseinrichtung und der Ausgabeeinrichtung als integrierte monolithische Mikrowellenschaltung ausgebildet.

Gemäß einer weiteren bevorzugten Weiterbildung weist die Ausgabeeinrichtung eine Recheneinheit auf, welche dazu ausgelegt ist, basierend auf den voneinander getrennten ersten und zweiten Signalen ein Ausgabesignal zu erzeugen, welches eine Anpassung der Vorrichtung indiziert. Somit kann auf eine externe Recheneinrichtung zum Bestimmen der Anpassung verzichtet werden, wodurch die erfindungsgemäße Vorrichtung flexibler einsetzbar wird.

Gemäß einer weiteren bevorzugten Weiterbildung umfasst die Ausgabeeinrichtung einen ersten Analog-Digital-Wandler, welcher dazu ausgelegt ist, die ersten Signale von analogen Signalen in digitale Signale umzuwandeln. Die Ausgabeeinrichtung umfasst vorzugsweise weiterhin einen zweiten Analog-Digital-Wandler, welcher dazu ausgelegt ist, die zweiten Signale von analogen Signalen in digitale Signale umzuwandeln. Die oben beschriebene Recheneinheit kann insbesondere zum Verarbeiten der umgewandelten digitalen ersten und zweiten Signale ausgebildet sein.

### Kurze Beschreibung der Zeichnungen

Die vorliegende Erfindung wird nachfolgend anhand der in den schematischen Figuren der Zeichnungen dargestellten Ausführungsbeispiele näher erläutert. Es zeigen:
- Fig. 1: ein schematisches Schaltbild einer Vorrichtung zum Verarbeiten oder Erzeugen eines Signals gemäß einer nicht unter die geschützte Erfindung fallenden Ausführungsform;
- Fig. 2: ein schematisches Schaltbild einer Vorrichtung zum Verarbeiten oder Erzeugen eines Signals gemäß einer nicht unter die geschützte Erfindung fallenden Ausführungsform;
- Fig. 3: ein schematisches Schaltbild einer Vorrichtung zum Verarbeiten oder Erzeugen eines Signals gemäß einer Ausführungsform der vorliegenden Erfindung;
- Fig. 4: ein schematisches Schaltbild einer Vorrichtung zum Verarbeiten oder Erzeugen eines Signals gemäß einer nicht unter die geschützte Erfindung fallenden Ausführungsform;
- Fig. 5: ein schematisches Schaltbild einer Vorrichtung zum Verarbeiten oder Erzeugen eines Signals gemäß einer nicht unter die geschützte Erfindung fallenden Ausführungsform; und
- Fig. 6: ein schematisches Flussdiagramm zum Erläutern eines Verfahrens zum Ermitteln einer Anpassung einer Vorrichtung zum Verarbeiten oder Erzeugen eines Signals gemäß einer nicht unter die geschützte Erfindung fallenden Ausführungsform.

In allen Figuren sind gleiche bzw. funktionsgleiche Elemente und Vorrichtungen - sofern nichts anderes angegeben ist - mit denselben Bezugszeichen versehen. Die Nummerierung von Verfahrensschritten dient der Übersichtlichkeit und soll insbesondere nicht, sofern nichts anderes angegeben ist, eine bestimmte zeitliche Reihenfolge implizieren. Insbesondere können auch mehrere Verfahrensschritte gleichzeitig durchgeführt werden.

### Beschreibung der Ausführungsbeispiele

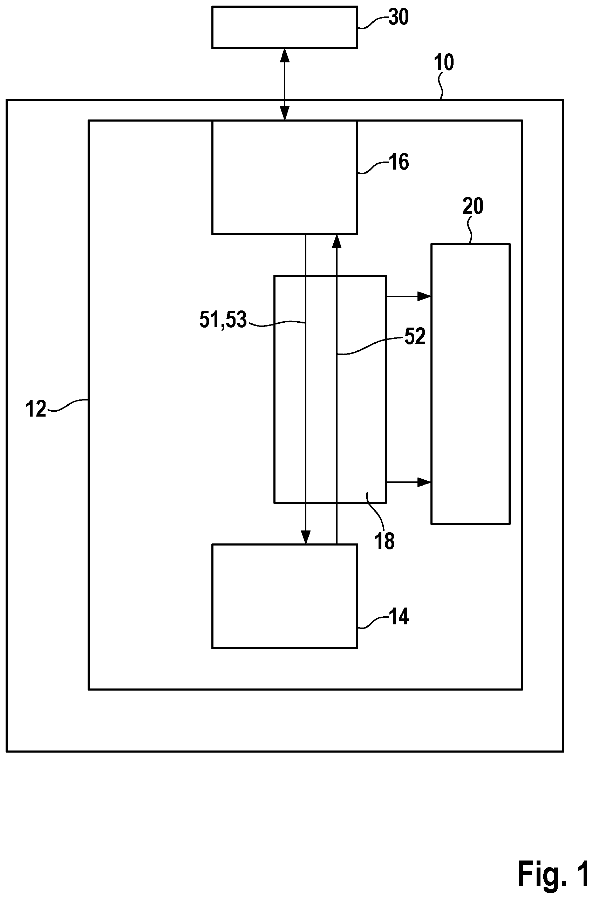

Fig. 1 zeigt ein schematisches Schaltbild einer Vorrichtung 10 zum Verarbeiten oder Erzeugen eines Signals 51, 52 gemäß einer nicht unter die geschützte Erfindung fallenden Ausführungsform.

Die Vorrichtung 10 umfasst ein Substrat 12, in welchem die weiteren Bestandteile und Einrichtungen der Vorrichtung 10 vorzugsweise integriert ausgebildet sind.

Die Vorrichtung 10 umfasst eine Signaleinrichtung 14, welche zum Verarbeiten eines Empfangssignals 51 und/oder zum Erzeugen eines Sendesignals 52 ausgebildet ist. Ist die Signaleinrichtung 14 lediglich zum Erzeugen eines Sendesignals 52 ausgebildet, ist die Signaleinrichtung 14 auch als Signalerzeugungseinrichtung bezeichenbar. Ist die Signaleinrichtung lediglich zum Verarbeiten eines Empfangssignals 51 ausgebildet, ist die Signaleinrichtung 14 auch als Signalverarbeitungseinrichtung bezeichenbar. Die Signaleinrichtung 14 kann insbesondere leistungselektronische Komponenten, Mikroprozessoren, Logikschaltungen und dergleichen umfassen.

Die Vorrichtung 10 weist weiterhin eine Schnittstelleneinrichtung 16 auf, mittels welcher die Signaleinrichtung 14 mit einer Sende- und/oder Empfangsantenne 30, insbesondere einer externen Sende- und/oder Empfangsantenne 30, zum Aussenden des erzeugten Sendesignals 52 und/oder zum Empfangen des zu verarbeitenden Empfangssignals 51 koppelbar oder gekoppelt ist. Die externe Sende- und/oder Empfangsantenne 30 kann beispielsweise auf einer Hochfrequenz-Leiterplatte als eine passive, resonante Struktur ausgebildet sein. Das Koppeln der Sende- und/oder Empfangsantenne 30 mit der Vorrichtung 10, das heißt mit dem Substrat 12, insbesondere mit der Signaleinrichtung 14, kann beispielsweise über Mikrostreifenleitungen und sonstige geeignete Aufbau- und/oder Verbindungstechnik erfolgen, beispielsweise durch Bonden eines nackten Chips, Löten eines BGA-MMICs und dergleichen.

Die Vorrichtung 10 umfasst außerdem eine Trennungseinrichtung 18, welche dazu ausgelegt ist, erste Signale 51, 53, welche von der Schnittstelleneinrichtung 16 aus auf die Signaleinrichtung 14 zulaufen, von zweiten Signalen 52 zu trennen, welche von der Signaleinrichtung 14 aus auf die Schnittstelleneinrichtung 16 zulaufen. Die ersten Signale 51, 53 können insbesondere ein durch die Signaleinrichtung 14 zu verarbeitendes, durch die Sende- und/oder Empfangsantenne 30 empfangenes Empfangssignal 51 umfassen. Die zweiten Signale 52 können insbesondere ein durch die Signaleinrichtung 14 erzeugtes Sendesignal 52, welches zum Aussenden durch die Sende- und/oder Empfangsantenne 30 ausgebildet ist, umfassen.

Die ersten Signale 51, 53, welche von der Schnittstelleneinrichtung 16 aus auf die Signaleinrichtung 14 zulaufen, können weiterhin an der Schnittstelleneinrichtung 16 und/oder an einer Stoßstelle zwischen der Schnittstelleneinrichtung 16 und der gekoppelten Sende- und/oder Empfangsantenne 30 reflektierte Signale 53 umfassen. Die reflektierten Signale 53 können beispielsweise dadurch entstehen, dass das von der Signaleinrichtung 14 erzeugte Sendesignal 52, welches zum Aussenden durch die Sende- und/oder Empfangsantenne 30 an die Schnittstelleneinrichtung 16 weitergeleitet wird, an der Schnittstelleneinrichtung 16 und/oder an der Stoßstelle zwischen der Schnittstelleneinrichtung 16 und der Sende- und/oder Empfangsantenne 30 teilweise oder vollständig reflektiert wird. Eine an der Sende- und/oder Empfangsantenne 30 ankommende Sendeleistung ist somit durch die reflektierten Signale 53 verringert. Der Grad dieser Verringerung wird durch die Größe "Anpassung" indiziert.

Die Vorrichtung 10 ist weiterhin mit einer Ausgabeeinrichtung 20 ausgebildet, an welcher die voneinander getrennten ersten und zweiten Signale 51, 52, 53 zum Berechnen der Anpassung getrennt voneinander abgreifbar sind. Eine Verarbeitung der voneinander getrennten ersten und zweiten Signale 51, 52, 53 kann beispielsweise durch eine externe Recheneinheit erfolgen. Es kann aber auch die Vorrichtung 10 eine entsprechende Recheneinheit aufweisen.

Die Signaleinrichtung 14, die Schnittstelleneinrichtung 16, die Trennungseinrichtung 18 und die Ausgabeeinrichtung 20 sind an dem Substrat 12 angeordnet, insbesondere in das Substrat 12 integriert.

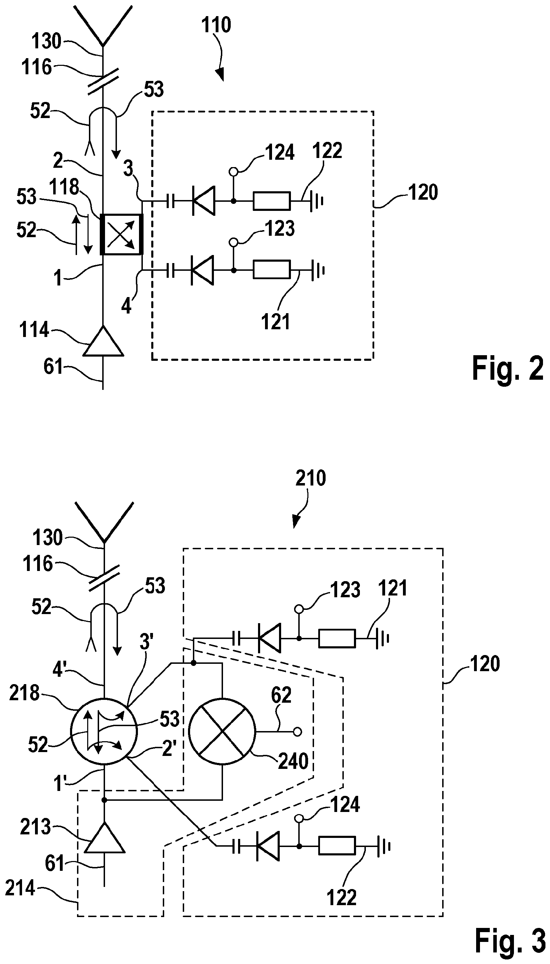

Fig. 2 zeigt ein schematisches Schaltbild einer Vorrichtung 110 zum Verarbeiten oder Erzeugen eines Signals 51, 52 gemäß einer nicht unter die geschützte Erfindung fallenden Ausführungsform. Die Vorrichtung 110 ist eine Variante der Vorrichtung 10.

Die Vorrichtung 110 umfasst eine Signaleinrichtung 114, welche dazu ausgelegt ist, mittels eines Verstärkers ein eingehendes Rohsignal 61 zu verstärken und als Sendesignal 52 bereitzustellen. Die Vorrichtung 110 umfasst weiterhin eine Schnittstelleneinrichtung 116, mittels welcher die Signaleinrichtung 114 mit einer Sende- und Empfangsantenne 130 koppelbar oder gekoppelt ist. Die Sende- und Empfangsantenne 130 kann Teil der Vorrichtung 110 sein oder von dieser separat ausgebildet sein. Die Vorrichtung 110 ist insbesondere als ein, oder in einem, bistatischem Radar verwendbar. Das Sendesignal 52 wird von der Signaleinrichtung 114 über eine dedizierte Leitung an die Schnittstelleneinrichtung 116 geführt. Als eine Trennungseinrichtung 118 der Vorrichtung 110 ist zwischen der Signaleinrichtung 114 und der Schnittstelleneinrichtung 116 ein Richtkoppler 118 geschaltet, insbesondere ein 90°- Hybrid-Richtkoppler.

Ein Richtkoppler ist insbesondere ein aus der Hochfrequenztechnik bekanntes Viertorbauteil, welches über geeignete Impedanz- und/oder Leitungslängenauslegung eine individuelle Kopplung von Signalen an seinen vier Toren ermöglicht. Insbesondere liegt an einem ersten Eingangstor 1 ein hinlaufendes Signal und an einem zweiten Eingangstor 2 ein rücklaufendes Signal an. An einem dritten Ausgangstor 3 liegt ein ausgekoppeltes hinlaufendes Signal an und an einem vierten Ausgangstor 4 liegt ein ausgekoppeltes rücklaufendes Signal an. Das vierte Ausgangstor 4 ist gegenüber dem ersten Eingangstor 1 isoliert und das dritte Ausgangstor 3 ist gegenüber dem zweiten Eingangstor 2 isoliert, wodurch eine Richtungstrennung ermöglicht wird. Bei der Vorrichtung 110 ist das erste Eingangstor 1 an die Signaleinrichtung 114 angeschlossen. Das zweite Eingangstor 2 an die Schnittstelleneinrichtung 116 angeschlossen und das dritte und das vierte Ausgangstor 3, 4 sind an eine Ausgabeeinrichtung 120 der Vorrichtung 110 angeschlossen.

Die Signaleinrichtung 114 ist außerdem zum Verarbeiten eines durch die Sende- und Empfangsantenne 130 empfangenen Empfangssignals 51, welche über das erste und das zweite Eingangstor 1, 2 übermittelt wird, ausgebildet.

Wie in Fig. 2 gezeigt, sind an das vierte Ausgangstor 4 eine erste Messeinrichtung 121 der Ausgabeeinrichtung 120 angeschlossen und an das dritte Ausgangstor 3 eine zweite Messeinrichtung 122 der Ausgabeeinrichtung 120 angeschlossen. An der ersten Messeinrichtung 121 lässt sich zwischen einem ersten elektrischen Kontakt 123 und Erde (englisch "ground", GND) ein elektrisches Signal abgreifen, welches erste Signale 51, 53 darstellt oder indiziert, welche von der Schnittstelleneinrichtung 116 aus auf die Signaleinrichtung 114 zulaufen, insbesondere wie in Bezug auf die Vorrichtung 10 beschrieben. Zwischen dem ersten Kontakt 123 und dem vierten Ausgangstor 4 können beispielsweise ein Kondensator und/oder eine Gleichrichterdiode in Sperrrichtung angeordnet sein, wie in Fig. 2 gezeigt.

An der zweiten Messeinrichtung 122 lässt sich zwischen einem zweiten elektrischen Kontakt 124 und Erde ein elektrisches Signal abgreifen, welches zweite Signale 52 darstellt oder indiziert, welche von der Signaleinrichtung 114 aus auf die Schnittstelleneinrichtung 116 zulaufen, insbesondere wie in Bezug auf die Vorrichtung 10 beschrieben. Zwischen dem zweiten Kontakt 124 und dem dritten Ausgangstor 3 können beispielsweise ein Kondensator und/oder eine Gleichrichterdiode in Sperrrichtung angeordnet sein, wie in Fig. 2 gezeigt. Fig. 3 zeigt ein schematisches Schaltbild einer Vorrichtung 210 zum Verarbeiten

oder Erzeugen eines Signals 51, 52 gemäß einer Ausführungsform der vorliegenden Erfindung. Die Vorrichtung 210 ist eine Variante der Vorrichtung 110 und unterscheidet sich von dieser im Wesentlichen in der Trennungseinrichtung 218 der Vorrichtung 210 sowie in der Art der Signalverarbeitung.

Die Vorrichtung 210 umfasst eine Signaleinrichtung 214, welche zum Erzeugen eines Sendesignals 52 basierend auf einem Rohsignal 61 sowie zum Verarbeiten eines Empfangssignals 51 zum Erzeugen eines Nutzsignals 62 ausgebildet ist. Die Trennungseinrichtung 218 der Vorrichtung 210 ist als ein Ringkoppler 218 mit ersten bis vierten Toren 1', 2', 3', 4' ausgebildet. Die Signaleinrichtung 214 ist an einem ersten Tor 1'und an einem dritten Tor 3' und die Schnittstelleneinrichtung 116 der Vorrichtung 210 ist an einem vierten Tor 4' des Ringkopplers 218, welcher auch als Rat-Race-Koppler bezeichenbar ist, angeschlossen. Die zweite Messeinrichtung 121 der Ausgabeeinrichtung 120 der Vorrichtung 210 ist wie in Bezug auf Fig. 2 beschrieben ausgebildet und an ein zweites Tor 2' des Ringkopplers 218 angeschlossen. Eine wie in Bezug auf die Vorrichtung 110 beschrieben ausgebildete erste Messeinrichtung 121 ist an ein drittes Tor 3' des Ringkopplers 218 angeschlossen. An dem ersten Tor 1' ist ein Signalverstärker 213 der Signaleinrichtung 214 angeschlossen, welcher dazu ausgelegt ist, das Rohsignal 61 zum Erzeugen des Sendesignals 52 zu verstärken.

Die Signaleinrichtung 214 weist weiterhin einen Mischer 240 auf, welcher zum Verarbeiten eines, über die Schnittstelleneinrichtung 116 von der Sende- und Empfangsantenne 130 empfangenen, Empfangssignals 51 ausgebildet ist. Als Eingangssignal erhält der Mischer 240 ein Signal, welches von dem dritten Tor 3' des Ringkopplers 218 abgezweigt wird. Als Oszillatorsignal, das heißt als LO-Signal, empfängt der Mischer 240 das an dem ersten Tor 1' des Ringkopplers 218 anliegende Signal. Der Mischer 240 ist dazu ausgebildet, durch Mischen aus dem Eingangssignal und dem Oszillatorsignal ein Nutzsignal 62 zu erzeugen, welches beispielsweise zur weiteren Verarbeitung eines Informationsgehalts des Empfangssignals 51 verwendet werden kann.

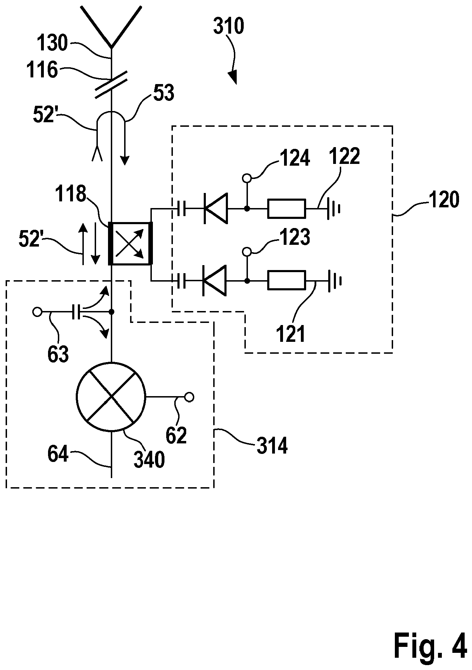

Fig. 4 zeigt ein schematisches Schaltbild einer Vorrichtung 310 zum Verarbeiten eines Signals 52 gemäß einer nicht unter die geschützte Erfindung fallenden Ausführungsform. Die Vorrichtung 310 ist eine weitere Variante der Vorrichtung 110.

Im Vergleich zur Vorrichtung 110 ist die Vorrichtung 310 lediglich für einen Empfang ausgelegt, das heißt zum Verarbeiten eines Empfangssignals 51, welches durch eine Empfangsantenne 330 der Vorrichtung 310 empfangbar und über die Schnittstelleneinrichtung 116 der Vorrichtung 310 an die Signaleinrichtung 314 der Vorrichtung 310 übermittelbar ist. Die Schnittstelleneinrichtung 116, die Trennungseinrichtung 118 und die Ausgabeeinrichtung 120 sind ausgebildet wie in Bezug auf die Vorrichtung 110 beschrieben.

Die Signaleinrichtung 314, welche als Signalverarbeitungseinrichtung 314 bezeichenbar ist, umfasst einen Mischer 340 und eine Testsignal-Bereitstellungseinrichtung 342. Der Mischer 340 ist dazu ausgelegt, ein Oszillatorsignal, das heißt ein LO-Signal 64 zu empfangen und mit dem von der Schnittstelleneinrichtung 116 empfangenen Empfangssignal 51 zum Erzeugen eines Nutzsignals 62 zu mischen. Bei der Vorrichtung 310 würde somit im Vergleich zu den vorangehend beschriebenen Vorrichtungen 10; 110; 210 ein Referenzsignal für die Bestimmung der Anpassung fehlen. Dazu weist die Vorrichtung 310 die Testsignal-Bereitstellungseinrichtung 342 auf, welche dazu ausgelegt ist, ein Testsignal 63 bereitzustellen und ungerichtet zwischen der Trennungseinrichtung 118, insbesondere an dem ersten Eingangstor 1 der Trennungseinrichtung 118, und dem Mischer 340 einzuspeisen. Das Testsignal 63 kann insbesondere von dem hochfrequenten LO-Signal 64 durch die Testsignal-Bereitstellungseinrichtung 342 abgeleitet werden, wobei die Testsignal-Bereitstellungseinrichtung 342 weiterhin dazu ausgelegt ist, mittels geeigneter Verfahren einen Frequenzoffset aufzuprägen. Dieser Frequenzoffset manifestiert sich nach der Mischung mit dem LO-Signal 64 als ein niederfrequentes Basisbandsignal.

Durch das ungerichtete Einspeisen des Testsignals 63 wird erreicht, dass eine Hälfte einer Signalleistung des Testsignals 63 in Richtung der Schnittstelleneinrichtung 116 geleitet wird und somit wie ein effektives Sendesignal 52' wirkt. Über das gleiche Verfahren, welches in Bezug auf die Vorrichtung 110 beschrieben wurde, ist es nun wieder möglich, mittels der Trennungseinrichtung 118 die ersten und zweiten Signale 51, 52', 53 zum Bestimmen der Anpassung bereitzustellen. Das beschriebene Einspeisen des Testsignals 63 kann insbesondere in einem Testmodus der Vorrichtung 310 durchgeführt werden, während welchem insbesondere ein reguläres Empfangen eines Empfangssignals 51 nicht erfolgt.

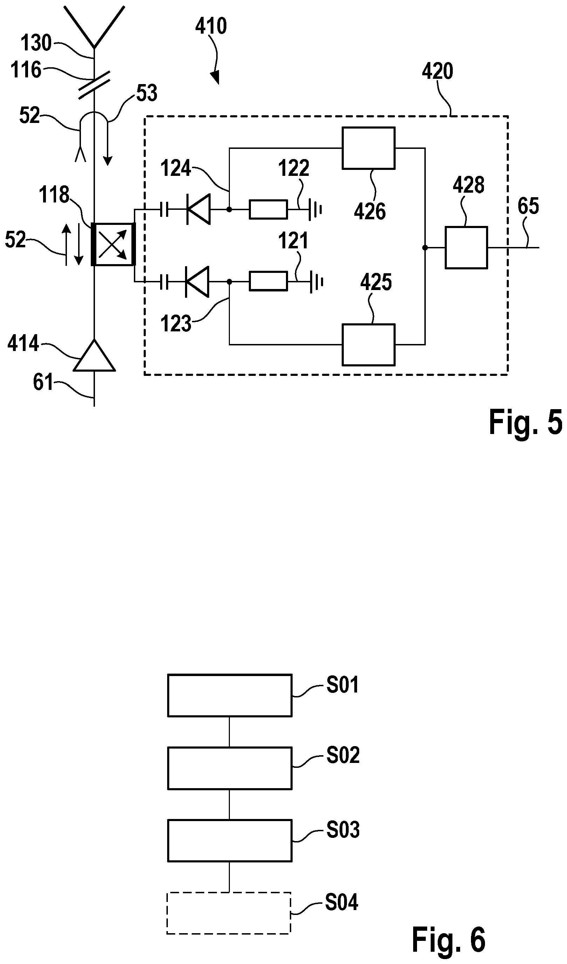

Fig. 5 zeigt ein schematisches Schaltbild einer Vorrichtung 410 zum Verarbeiten oder Erzeugen eines Signals 51, 52 gemäß noch einer nicht unter die geschützte Erfindung fallenden Ausführungsform. Die Vorrichtung 410 ist eine Variante der Vorrichtung 110, so dass bereits in Bezug auf die Vorrichtung 110 beschriebene Elemente nicht erneut beschrieben werden.

Die Vorrichtung 410 unterscheidet sich von der Vorrichtung 110 in einer Ausgabeeinrichtung 420 der Vorrichtung 410, welche an die Stelle der Ausgabeeinrichtung 120 der Vorrichtung 110 tritt. Die Ausgabeeinrichtung 420 umfasst die erste und die zweite Messeinrichtung 121, 122 wie in Bezug auf die Vorrichtung 110 beschrieben. Der erste elektrische Kontakt 123 der ersten Messeinrichtung 121 ist mit einem ersten Analog-Digital-Wandler 425 der Ausgabeeinrichtung 420 verbunden, welcher dazu ausgelegt ist, die ersten Signale 51, 53 aus der ersten Messeinrichtung 121 zu digitalisieren und an eine Recheneinheit 428 der Ausgabeeinrichtung 420 zu übermitteln. Der zweite elektrische Kontakt 124 der zweiten Messeinrichtung 122 ist mit einem zweiten Analog-Digital-Wandler 426 der Ausgabeeinrichtung 420 verbunden, welcher dazu ausgelegt ist, die zweiten Signale 52' aus der zweiten Messeinrichtung 122 zu digitalisieren und an die Recheneinheit 428 der Ausgabeeinrichtung 420 zu übermitteln.

Die Recheneinheit 428 ist dazu ausgebildet, basierend auf den digitalisierten ersten und zweiten Signalen 51, 52', 53 ein Ausgabesignal 65 zu erzeugen und auszugeben, welches die Anpassung der Vorrichtung 410 indiziert. Das Ausgabesignal 65 kann beispielsweise an einem Kontaktpunkt der Vorrichtung 410 für externe Vorrichtungen abgreifbar bereitgestellt werden.

Fig. 6 zeigt ein schematisches Flussdiagramm zum Erläutern eines Verfahrens zum Ermitteln einer Anpassung einer Vorrichtung 10; 110; 210; 310; 410 zum Verarbeiten oder Erzeugen eines Signals 51, 52, 52' gemäß einer weiteren nicht unter die geschützte Erfindung fallenden Ausführungsform. Das Verfahren gemäß Fig. 6 ist insbesondere mittels der erfindungsgemäßen Vorrichtung durchführbar, insbesondere mittels der beschriebenen Vorrichtung 210. Das Verfahren gemäß Fig. 6 ist daher gemäß allen in Bezug auf die erfindungsgemäße Vorrichtung, insbesondere die Vorrichtung 210 beschriebenen Modifikationen und Weiterbildungen anpassbar und umgekehrt.

In einem ersten Schritt S01 wird ein Sendesignal 52 oder ein Testsignal 63 mittels einer Signaleinrichtung 14; 114; 214; 314 einer Vorrichtung 10; 110; 210; 310; 410 zum Verarbeiten oder Erzeugen eines Signals 51, 52 erzeugt, insbesondere wie im Voranstehenden in Bezug auf die Signaleinrichtungen 14; 114; 214; 314 beschrieben.

In einem Schritt S02 werden erste Signale 51, 53, welche von einer Schnittstelleneinrichtung 16; 116 der Vorrichtung 10; 110; 210; 310; 410 aus auf die Signaleinrichtung 14; 114; 214; 314 zulaufen, von zweiten Signalen 52; 52' getrennt, welche von der Signaleinrichtung 14; 114; 214; 314 aus auf die Schnittstelleneinrichtung 16; 116 zulaufen. Die Schnittstelleneinrichtung 16; 116 ist insbesondere mit einer Sende- und/oder Empfangsantenne 30; 130; 330 koppelbar oder gekoppelt. In einem Schritt S03 werden die ersten Signale 51, 53 und die zweiten Signale 52; 52' voneinander getrennt ausgegeben. In einem optionalen Schritt S04 wird basierend auf dem ersten und dem zweiten Signal 51, 52, 52', 53 ein Ausgabesignal 65 erzeugt, welches eine Anpassung der Vorrichtung 10; 110; 210; 310; 410 indiziert. Das Verfahren gemäß Fig. 6 kann kontinuierlich während eines Sendebetriebs der Vorrichtung 10; 110; 210; 310; 410 durchgeführt werden. Alternativ oder zusätzlich kann das Verfahren gemäß Fig. 6 auch in einem Testmodus der Vorrichtung 10; 110; 210; 310; 410 durchgeführt werden, wie voranstehend beschrieben.

## Patentansprüche

1. Vorrichtung (210) zum Verarbeiten oder Erzeugen eines Signals (51, 52) mit:
einem Substrat (12);
einer Signaleinrichtung (214), welche zum Verarbeiten eines Empfangssignals (51) und/oder zum Erzeugen eines Sendesignals (52) ausgebildet ist;
einer Schnittstelleneinrichtung (116), mittels welcher die Signaleinrichtung (214) mit einer Sende- und/oder Empfangsantenne (130) zum Aussenden des erzeugten Sendesignals (52) und/oder zum Empfangen des zu verarbeitenden Empfangssignals (51) koppelbar ist;
einer Trennungseinrichtung (218), welche dazu ausgelegt ist, erste Signale (53), welche von der Schnittstelleneinrichtung (116) aus auf die Signaleinrichtung (214) zulaufen, von zweiten Signalen (52; 52') zu trennen, welche von der Signaleinrichtung (214) aus auf die Schnittstelleneinrichtung (116) zulaufen; und
einer Ausgabeeinrichtung (120), an welcher die voneinander getrennten ersten und zweiten Signale (51, 52, 52', 53) zum Berechnen einer Anpassung getrennt voneinander abgreifbar sind; wobei die ersten Signale (53) an einer ersten Messeinrichtung (121) der Ausgabeeinrichtung (120) abgreifbar sind und wobei die zweiten Signale (52) an einer zweiten Messeinrichtung (122) der Ausgabeeinrichtung (120) abgreifbar sind;
wobei die Signaleinrichtung (214), die Schnittstelleneinrichtung (116), die Trennungseinrichtung (218) und die Ausgabeeinrichtung (120) an dem Substrat (12) angeordnet sind;
wobei
die Trennungseinrichtung (218) als viertoriger Ringkoppler (218) mit einem ersten Tor (1'), einem zweiten Tor (2'), einem dritten Tor (3') und einem vierten Tor (4') ausgebildet ist;
wobei die Signaleinrichtung (214) an dem ersten Tor (1') und an dem dritten Tor (3') angeschlossen ist und wobei die Schnittstelleneinrichtung (116) der Vorrichtung (210) an dem vierten Tor (4') angeschlossen ist;
wobei die erste Messeinrichtung (121) an das dritte Tor (3') des Ringkopplers (218) angeschlossen ist und wobei die zweite Messeinrichtung an ein zweites Tor (2') des Ringkopplers (218) angeschlossen ist;
wobei die Signaleinrichtung (214) außerdem einen Mischer (240) aufweist, welcher zum Verarbeiten des über die Schnittstelleneinrichtung (116) empfangenen Empfangssignals (51) ausgebildet ist;
wobei der Mischer (240) als ein Eingangssignal ein Signal erhält, welches von dem dritten Tor (3') des Ringkopplers (218) abgezweigt wird, und der Mischer (240) dazu ausgebildet ist, als Oszillatorsignal ein an dem ersten Tor (1') des Ringkopplers (218) anliegendes Signal zu empfangen; und
wobei der Mischer (240) dazu ausgebildet ist, durch Mischen aus dem Eingangssignal und dem Oszillatorsignal ein Nutzsignal (62) zu erzeugen.

2. Vorrichtung (210) nach Anspruch 1,
wobei das Substrat (12) mit der Signaleinrichtung (214), der Schnittstelleneinrichtung (16), der Trennungseinrichtung (218) und der Ausgabeeinrichtung (220) als monolithische Mikrowellenschaltung ausgebildet ist.

3. Vorrichtung (410) nach einem der Ansprüche 1 oder 2,
wobei die Ausgabeeinrichtung (420) eine Recheneinheit (428) aufweist, welche dazu ausgelegt ist, basierend auf den voneinander getrennten ersten und zweiten Signalen (51, 52) ein Ausgabesignal (65) zu erzeugen, welches eine Anpassung der Vorrichtung (410) indiziert.

4. Vorrichtung (410) nach einem der Ansprüche 1 bis 3,
wobei die Ausgabeeinrichtung (420) einen ersten Analog-Digital-Wandler (425) umfasst, welcher dazu ausgelegt ist, die ersten Signale (51, 53) von analogen Signalen in digitale Signale umzuwandeln; und
wobei die Ausgabeeinrichtung (420) einen zweiten Analog-Digital-Wandler (426) umfasst, welcher dazu ausgelegt ist, die zweiten Signale (52) von analogen Signalen in digitale Signale umzuwandeln.

## Claims

1. Device (210) for processing or generating a signal (51, 52), having:
a substrate (12);
a signal apparatus (214) that is designed to process a reception signal (51) and/or to generate a transmission signal (52);
an interface apparatus (116) by way of which the signal apparatus (214) is able to be coupled to a transceiver antenna (130) in order to transmit the generated transmission signal (52) and/or to receive the reception signal (51) to be processed;
a separation apparatus (218) that is designed to separate first signals (53) that run from the interface apparatus (116) to the signal apparatus (214) from second signals (52; 52') that run from the signal apparatus (214) to the interface apparatus (116); and
an output apparatus (120) at which the separated first and second signals (51, 52, 52', 53) are able to be tapped off separately from one another in order to calculate an adjustment; wherein the first signals (53) are able to be tapped off at a first measuring apparatus (121) of the output apparatus (120) and wherein the second signals (52) are able to be tapped off at a second measuring apparatus (122) of the output apparatus (120);
wherein the signal apparatus (214), the interface apparatus (116), the separating apparatus (218) and the output apparatus (120) are arranged on the substrate (12) ;
wherein the separating apparatus (218) is in the form of a four-gate ring coupler (218) having a first gate (1'), a second gate (2'), a third gate (3') and a fourth gate (4');
wherein the signal apparatus (214) is connected at the first gate (1') and at the third gate (3') and wherein the interface apparatus (116) of the device (210) is connected at the fourth gate (4');
wherein the first measuring apparatus (121) is connected to the third gate (3') of the ring coupler (218) and wherein the second measuring apparatus is connected to a second gate (2') of the ring coupler (218);
wherein the signal apparatus (214) furthermore has a mixer (240) that is designed to process the reception signal (51) received via the interface apparatus (116);
wherein the mixer (240) receives, as input signal, a signal that is branched off from the third gate (3') of the ring coupler (218) and the mixer (240) is designed, as oscillator signal, to receive a signal present at the first gate (1') of the ring coupler (218); and
wherein the mixer (240) is designed to generate a payload signal (62) by mixing the input signal and the oscillator signal.

2. Device (210) according to Claim 1,
wherein the substrate (12) having the signal apparatus (214), the interface apparatus (16), the separating apparatus (218) and the output apparatus (220) is in the form of a monolithic microwave circuit.

3. Device (410) according to either of Claims 1 and 2,
wherein the output apparatus (420) has a computing unit (428) that is designed, based on the separated first and second signals (51, 52), to generate an output signal (65) that indicates an adjustment of the device (410).

4. Device (410) according to one of Claims 1 to 3,
wherein the output apparatus (420) comprises a first analogue-to-digital converter (425) that is designed to convert the first signals (51, 53) from analogue signals into digital signals; and
wherein the output apparatus (420) comprises a second analogue-to-digital converter (426) that is designed to convert the second signals (52) from analogue signals into digital signals.

## Revendications

1. Dispositif (210) destiné à traiter ou générer un signal (51, 52), ledit dispositif comprenant :
un substrat (12) ;
un module de signal (214) qui est conçu pour traiter un signal de réception (51) et/ou pour générer un signal d'émission (52) ;
un dispositif d'interface (116) permettant de coupler le module de signal (214) à une antenne d'émission et/ou de réception (130) afin d'émettre le signal d'émission généré (52) et/ou de recevoir le signal de réception (51) à traiter ;
un module de séparation (218) qui est conçu pour séparer des premiers signaux (53), qui vont du module d'interface (116) au module de signal (214), des deuxièmes signaux (52 ; 52') qui vont du module de signal (214) au module d'interface (116) ; et
un module de sortie (120) au niveau duquel les premiers et deuxièmes signaux séparés (51, 52, 52', 53) peuvent être prélevés séparément l'un de l'autre pour calculer une adaptation ; les premiers signaux (53) pouvant être prélevés sur un premier module de mesure (121) du module de sortie (120) et les deuxièmes signaux (52) pouvant être prélevés sur un deuxième module de mesure (122) du module de sortie (120) ;
le module de signal (214), le module d'interface (116), le module de séparation (218) et le module de sortie (120) étant disposés sur le substrat (12) ;
le module de séparation (218) étant conçu comme un coupleur annulaire (218) à quatre ports comprenant un premier port (1'), un deuxième port (2'), un troisième port (3') et un quatrième port (4') ;
le module de signal (214) étant raccordé au premier port (1') et au troisième port (3') et le module d'interface (116) du dispositif (210) étant raccordé au quatrième port (4') ;
le premier module de mesure (121) étant raccordé au troisième port (3') du coupleur annulaire (218) et le deuxième module de mesure étant raccordé à un deuxième port (2') du coupleur annulaire (218) ;
le module de signal (214) comportant en outre un mélangeur (240) qui est conçu pour traiter le signal de réception (51) reçu par le biais du module d'interface (116) ;
le mélangeur (240) recevant comme signal d'entrée un signal qui est dérivé du troisième port (3') du coupleur annulaire (218), et le mélangeur (240) étant conçu pour recevoir comme signal d'oscillateur le signal présent au premier port (1') sur le coupleur annulaire (218) ; et
le mélangeur (240) étant conçu pour générer un signal utile (62) en mélangeant le signal d'entrée et le signal d'oscillateur.

2. Dispositif (210) selon la revendication 1,
le substrat (12) pourvu du module de signal (214), du module d'interface (16), du module de séparation (218) et du module de sortie (220) étant conçu comme un circuit micro-onde monolithique.

3. Dispositif (410) selon l'une des revendications 1 et 2,
le module de sortie (420) comportant une unité de calcul (428) qui est conçue pour générer sur la base des premiers et deuxièmes signaux séparés (51, 52) un signal de sortie (65) qui indique une adaptation du dispositif (410).

4. Module (410) selon l'une des revendications 1 à 3,
le module de sortie (420) comprenant un premier convertisseur analogique-numérique (425) qui est conçu pour convertir les premiers signaux (51, 53) de signaux analogiques en signaux numériques ; et
le module de sortie (420) comprenant un deuxième convertisseur analogique-numérique (426) qui est conçu pour convertir les deuxièmes signaux (52) de signaux analogiques en signaux numériques.
